Europäisches Patentamt

European Patent Office

Office européen des brevets

(11) Veröffentlichungsnummer: **0 499 155 A1**

# (12) EUROPÄISCHE PATENTANMELDUNG

(21) Anmeldenummer: **92102040.0**

(22) Anmeldetag: **07.02.92**

(51) Int. Cl.5: **C07F 7/22**, C09D 5/44, C08G 18/24

(30) Priorität: **12.02.91 AT 294/91**

(43) Veröffentlichungstag der Anmeldung:
**19.08.92 Patentblatt 92/34**

(84) Benannte Vertragsstaaten:
**DE ES FR GB IT**

(71) Anmelder: **Vianova Kunstharz Aktiengesellschaft**

**A-8402 Werndorf(AT)**

(72) Erfinder: **Paar, Willibald, Dr.**
**Schanzelgasse 19**
**A-8010 Graz(AT)**
Erfinder: **Hönig, Helmut, Dr.**
**Seebachergasse 10**
**A-8010 Graz(AT)**

(54) Organozinn-Zubereitungen, ein Verfahren zu ihrer Herstellung und ihre Verwendung.

(57) Die Erfindung betrifft Organozinn-Zubereitungen, ein Verfahren zu ihrer Herstellung und ihre Verwendung zur Katalysierung der Vernetzungsreaktionen von durch Umesterung und/oder Umurethanisierung und/oder Reaktion endständiger Doppelbindungen vernetzbaren kationischen Lackbindemitteln.

Die Organozinn-Verbindungen werden durch mechanisches Dispergieren von Dibutylzinnoxid in einem Dispergiermedium hergestellt, welches aus a) mindestens einer substituierten Oxazolidinverbindung und gegebenenfalls aus b) und c) speziell ausgewählten wassertoleranten organischen Lösemitteln besteht.

Mit den Organozinn-Zubereitungen katalysierte kationische Lacke, insbesondere kathodisch abscheidbare Elektrotauchlacke, weisen eine sehr gute Sedimentationsstabilität in den verdünnten Lackansätzen und keine Oberflächenstörungen in den eingebrannten Lackfilmen auf.

EP 0 499 155 A1

EP 0 499 155 A1

Die Erfindung betrifft Organozinn-Zubereitungen, ein Verfahren zu ihrer Herstellung und ihre Verwendung zur Katalysierung der Vernetzungsreaktionen von kationischen Lackbindemitteln.

Kationische Lackbindemittel, die insbesondere zur Formulierung von kathodisch abscheidbaren Elektrotauchlakken eingesetzt werden, vernetzen bei erhöhter Temperatur zu einem wesentlichen Teil durch Umesterung, Umurethanisierung oder durch die Reaktion endständiger Doppelbindungen.

Es ist bekannt, daß derartige Vernetzungsreaktionen durch Metallverbindungen katalysiert werden. Eine solche Katalyse ist im Falle der Härtung von kathodisch abgeschiedenen Lackfilmen praktisch in allen Fällen notwendig, um das von den Anwendern in der Industrie geforderte Eigenschaftsbild zu erreichen.

Die wichtigsten in der Praxis verwendeten Katalysatoren sind organische Verbindungen des vierwertigen Zinns, welche beispielsweise als Dibutylzinnoxid $(C_4H_9)_2SnO$, als Dibutylzinndilaurat $(C_4H_9)_2Sn(OCOC_{12}H_{25})_2$ oder als Umsetzungsprodukte des Dibutylzinnoxids mit Alkoholen oder Phenolen eingesetzt werden. Alle angeführten Katalysatoren weisen jedoch Nachteile auf.

So ist Dibutylzinnoxid eine feste Substanz, welche bereits in einer möglichst feinverteilten Form in den Lackansatz eingebracht werden muß, da es erst in Lösung katalytisch voll wirksam wird. Beim Einsatz dieses Katalysators sind daher längere Homogenisierungszeiten notwendig. Erfolgt die Zerkleinerung, wie das bei Pigmenten und Füllstoffen vielfach üblich ist. durch Anreiben in einem Lackbindemittel, so kann wegen der dabei auftretenden Temperaturbelastung die katalytische Wirkung des Dibutylzinnoxids bereits ausgelöst und das Bindemittel in seiner Reaktivität im unerwünschten Maße vorzeitig aktiviert werden.

Die Verwendung von gegenüber den Bindemitteln inerten Dispergiermedien führt dagegen zu unvernetzten Molekülsegmenten im eingebrannten Film und ist ebenfalls nicht zielführend.

Bei Verwendung von Dibutylzinndilaurat wird durch Hydrolyse Säure freigesetzt, die sich speziell während des Betriebs von Elektrotauchanlagen als störend erweisen kann.

Dibutylzinnoxid und Dibutylzinndilaurat sind mit den verwendeten Lackbindemitteln vielfach nicht vollständig verträglich. Dies beeinträchtigt in vielen Fällen die Lagerfähigkeit, vor allem verdünnter Lacke, die als Nachfüllmaterial bei Elektrotauchanlagen eingesetzt werden.

Umsetzungsprodukte des Dibutylzinnoxids (DBTO) mit Alkoholen oder Phenolen, wie sie in der EP 0 261 486 B1 beschrieben werden, zeigen im gebrauchsfertigen Lack eine ausgezeichnete Verträglichkeit und Stabilität. Bei der Vernetzung der abgeschiedenen Filme bilden sich jedoch bei den dafür erforderlichen Temperaturen Spaltprodukte, die Oberflächenstörungen, wie Nadelstiche oder Krater, im eingebrannten Lackfilm bewirken.

Es wurde nun gefunden, daß eine technisch vorteilhafte Katalysierung der Vernetzungsreaktionen von kathodisch abscheidbaren Lackbindemitteln für Elektrotauchlacke auch mittels Dibutylzinnoxid möglich ist, wenn die mechanische Dispergierung des Dibutylzinnoxids in einem Gemisch aus mindestens einer Oxazolidinverbindung und spezifischen Lösemitteln erfolgt.

Die Erfindung betrifft demgemäß Organozinn-Zubereitungen, welche dadurch gekennzeichnet sind, daß sie Dibutylzinnoxid, welches nach mechanischer Dispergierung in einer Teilchengröße von 0,1 bis max. 5 $\mu$m vorliegt, und ein Dispergiermedium enthalten, welches aus

(a) 60 bis 100 Gew.-% mindestens einer, gegebenenfalls teilweise oder vollständig protonisierten, substituierten Oxazolidinverbindung, welche durch Umsetzung einer Hydroxyalkylaminoverbindung mit Formaldehyd erhalten wurde, und mindestens ein Oxazolidin-Strukturelement und eine, auf die primären Hydroxylgruppen bezogene Hydroxylzahl von max. 50 mg KOH/g sowie ein Molekulargewicht (berechnet) von 500 bis 4000 aufweist,

(b) 0 bis 40 Gew.-% mindestens eines, mit der Komponente (a) verträglichen, gegenüber Dibutylzinnoxid reaktionsinerten, wassertoleranten Lösemittels mit einem Siedepunkt zwischen 150 und 250°C. gegebenenfalls in Kombination mit bis zu 20 Gew.-% (bezogen auf die Menge der Komponente (b)) eines oberflächenaktiven Mittels, und

(c) 0 bis 40 Gew.-% mindestens eines wassertoleranten Lösemittels mit einem Siedepunkt zwischen 100 und 150°C

besteht, wobei die Prozentzahlen für die Komponenten (a), (b) und (c) die Summe 100 ergeben und die Organozinn-Zubereitungen einen Gehalt an Dibutylzinnoxid (bezogen auf den Gehalt an Zinn) von 5 bis 30 Gew.-%, vorzugsweise von 12 bis 25 Gew.-%, aufweisen.

Die Erfindung betrifft weiters ein Verfahren zur Herstellung der Organozinn-Zubereitungen, ihre Verwendung zur Katalysierung der Vernetzungsreaktionen von durch Umesterung und/oder Umurethanisierung und/oder Reaktion endständiger Doppelbindungen vernetzbaren kationischen Lackbindemitteln für kathodisch abscheidbare Elektrotauchlacke, sowie die mit den erfindungsgemäßen Organozinn-Zubereitungen katalysierten kationischen Lacke, insbesondere kathodisch abscheidbare Elektrotauchlacke.

Für die Komponente (a) des Dispergiermediums werden substituierte Oxazolidinverbindungen eingesetzt, wie sie durch die Umsetzung von Hydroxyalkylaminoverbindungen mit Formaldehyd erhalten werden.

2

Beispiele solcher Produkte, die eine oder mehrere Oxazolidinstrukturen und ein Molekulargewicht (berechnet) von 500 bis 4000 aufweisen, werden in der AT-PS 380 264 und in der AT-PS 380 266 beschrieben. Um eine Reaktion der Oxazolidinverbindungen mit dem Dibutylzinnoxid bei der während der Dispergierung auftretenden erhöhten Temperatur zu vermeiden, sollen diese Verbindungen nur untergeordnete Mengen an primären Hydroxylgruppen aufweisen. Eine Hydroxylzahl von 50 mg KOH/g darf nicht überschritten werden. Protonisierbare Gruppen dieser Verbindungen können vor oder nach dem Dispergiervorgang vollständig oder teilweise neutralisiert werden.

Als Komponente (b) werden hochsiedende Lösemittel mit einem Siedepunkt zwischen 150 und 250°C eingesetzt, die mit der Komponente (a) verträglich und gegenüber Dibutylzinnoxid reaktionsinert sind sowie eine ausreichende Wassertoleranz aufweisen. Diese ist dann gegeben, wenn die Organozinn-Zubereitung (einschließlich der Komponente (c)) in das ausgewählte wäßrige Lackbindemittel eingebracht werden kann, ohne daß eine Phasentrennung erfolgt. Vorteilhaft eingesetzte Lösemittel dieser Art sind die Dialkylether von Di- oder Trialkylenglykolen oder das 2,2,4-Trimethylpentandiolmonoisobutyrat (Markenname Texanol).

Die genannten Lösemittel der Komponente (b) können bis zu einem Prozentsatz von 20 Gew.-% (bezogen auf die Komponente (b)) durch oberflächenaktive Substanzen ersetzt werden. Es handelt sich dabei im wesentlichen um alkoxylierte Phenole oder Acetylenabkömmlinge vom Typ des 2,4,7,9-Tetramethyl-dec-5-in-4,7-diols.

Die Lösemittel der Komponente (c) sind wassertolerante Lösemittel mit einem Siedepunkt zwischen 100 und 150°C. Diese Lösemittel, wie Ketone oder Alkylether des Ethylen- bzw. Propylenglykols, dienen vor allem zur Einstellung einer vorteilhaften Viskosität für die Handhabung der Organozinn-Zubereitungen.

Die Dispergierung des handelsüblichen Dibutylzinnoxids im anspruchsgemäßen Medium erfolgt mit herkömmlichen Mahlaggregaten, wie in Perlmühlen oder auf Dreiwalzen.

Die anzustrebende Teilchengröße soll unter 5 $\mu$m liegen, womit unter Berücksichtigung der Homogenisierungszeiten, wie sie bei der Herstellung von kathodisch abscheidbaren Elektrotauchlacken üblicherweise eingehalten werden, die katalytische Wirksamkeit des in Lösung vorliegenden Dibutylzinnoxids gewährleistet ist.

Die Organozinn-Zubereitungen, die einen Gehalt an Dibutylzinnoxid (bezogen auf den Gehalt an Zinn) von 5 bis 30 Gew.-%, vorzugsweise von 12 bis 25 Gew.-%, aufweisen, können in konzentrierter Form dem Bindemittel, einem eventuell eingesetzten Pigmentanreibeharz oder der Pigmentpaste zugesetzt werden, wobei gegebenenfalls die Protonierung zusammen mit dem Bindemittel erfolgt. Die Zubereitungen können aber auch, soferne sie protonisierbare Gruppen tragen, in neutralisierter und mit Wasser und/oder Hilfslösemitteln versetzter Form dem verdünnten Lack oder dem Badmaterial während des Betriebes einer Elektrotauchanlage zugegeben werden.

Die katalysierten Elektrotauchlacke enthalten 0,1 bis 3,0 Gew.-%, vorzugsweise 1,0 bis 2,0 Gew.-%, Zinn, berechnet auf den Feststoff des Bindemittels, in Form der Organozinn-Zubereitungen.

Die Organozinn-Zubereitungen sind auch in der Kälte mit den Lackbindemitteln einwandfrei verträglich. Wegen des organophilen Charakters des Dispergiermediums verbleibt das Dibutylzinnoxid in der Harzphase des verdünnten Lacks und damit auch im während des Vorgangs der Elektrotauchlackierung durch die Endosmose weitgehend entwässerten Film.

Lackbindemittel, deren Vernetzungsreaktionen durch Umesterung, Umurethanisierung oder Reaktion endständiger Doppelbindungen mit Hilfe der erfindungsgemäßen Organozinn-Zubereitungen katalysiert werden können, sind in großer Zahl aus der Literatur bekannt. Ein näheres Eingehen auf den Aufbau und die Chemie dieser Produkte ist daher nicht notwendig.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

(A) Herstellung des Dispergiermediums

(A1): Eine Oxazolidinverbindung wird durch Umsetzung von 380 Teilen eines Bisphenol-A-diglycidylethers (Epoxidäquivalentgewicht ca. 190) mit 268 Tlen (1 Mol) Talgfettamin und 104 Tlen (0,8 Mol) Diethylaminopropylamin und anschließender Reaktion mit 66 Tlen (2 Mol) Paraformaldehyd (91 %) unter Abtrennung von 42 Tlen Reaktionswasser im Vakuum hergestellt. 100 Tle des Reaktionsproduktes werden mit 30 Tlen Texanol, 5 Tlen einer 50 Gew.-%igen Lösung in 2-Ethylhexanol eines oberflächenaktiven Mittels auf Acetylenbasis (2,4,7,9-Tetramethyl-dec-5-in-4,7-diol) und 11,6 Tlen Monoethylenglykolmonobutylether gemischt. Die Hydroxylzahl an primären Hydroxylgruppen ist Null, das Molgewicht beträgt ca. 780 und der Feststoffgehalt 70 %.

(A2): Aus einem Additionsprodukt aus 116 Tlen (1 Mol) Hexamethylendiamin und 500 Tlen (2 Mol) eines technischen Gemisches von Glycidylestern aus 1,1-Dimethyl-($C_7$ - $C_9$)-alkancarbonsäuren und 66 Tlen (2 Mol) Paraformaldehyd (91 %) wird unter azeotroper Abtrennung von 42 Tlen Reaktionswasser ein Dioxazolidin gebildet. Das als Schleppmittel eingesetzte Spezialbenzin (Siedebereich 80 bis 120°C) wird nach Erreichen der Wassermenge im Vakuum abgezogen. 100 Tle des Reaktionsproduktes werden mit 20 Tlen Texanol vermischt. Die Hydroxylzahl an primären Hydroxylgruppen ist Null, das Molgewicht beträgt ca. 640 und der Feststoffgehalt 83 %.

(A3): 100 Tle der gemäß (A1) hergestellten Dioxazolidinverbindung werden mit 30 Tlen Diethylenglykoldimethylether und 4 Tlen eines ethoxylierten Nonylphenols mit einem Molgewicht von ca. 340 (Markenname Triton X 35) gemischt. Feststoffgehalt ca. 75 %.

(A4): Aus 640 Tlen eines Epoxidharzes auf Basis von Polypropylenglykol (Epoxidäquivalentgewicht ca. 320) und 129 Tlen (1 Mol) 2-Ethylhexylamin sowie 61 Tlen (1 Mol) Monoethanolamin wird bei 80°C durch vollständige Umsetzung aller Epoxidgruppen ein Mol eines disekundären Amins hergestellt. 1900 Tle eines. Epoxidharzes auf Basis von Bisphenol A (Epoxidäquivalentgewicht ca.475), gelöst in 814 Tlen Methoxypropanol, werden zugegeben und mit dem Amin bei 80°C reagiert, bis die den sekundären Aminogruppen entsprechenden molaren Epoxidgruppen verbraucht sind. Anschließend erfolgt die Zugabe von 204 Tlen (2,0 Mol) Dimethylaminopropylamin und 66 Tlen (2,0 Mol) Paraformaldehyd (91 %) sowie Xylol als Kreislaufmittel für die azeotrope Destillation bei 90 bis 140°C. Nach erfolgter Oxazolidinbildung wird das Xylol aus dem Reaktionsmedium destillativ entfernt und der Ansatz mit 250 Tlen Ethylenglykolmonobutylehter verdünnt. Die Hydroxylzahl an primären Hydroxylgruppen beträgt ca. 19 mg KOH/g. das berechnete Molgewicht ca. 2960, der Feststoffgehalt ca. 74 %.

(B) Herstellung der Organozinn-Zubereitungen

Entsprechend den in der Tabelle 1 angegebenen Mengenverhältnissen werden das gegebenenfalls mit Essigsäure protonisierte Dispergiermedium und das Dibutylzinnoxid (DBTO) homogen vermischt und in einem geeigneten Mahlaggregat. vorzugsweise in einer Perlmühle oder auf einer Dreiwalze, bis zu einer Teilchengröße von ca. 3 μm vermahlen.

Tabelle 1

| Zubereitung | Dispergiermedium | DBTO | Gew.-% Sn (als Metall) |
|---|---|---|---|
| K1 | 135 Tle (A1)<br>9 Tle AC [x)] | 90 Tle | 18,3 |
| K2 | 200 Tle (A2) | 80 Tle | 19,1 |
| K3 | 75 Tle (A2)<br>95 Tle (A3)<br>8 Tle AC [x)] | 50 Tle | 13,4 |
| K 4 | 100 Tle (A4)<br>10 Tle AC [x)] | 25 Tle | 9,0 |

[x)] AC : 5N-Essigsäure

(C) Herstellung der mit den Organozinn-Zubereitungen katalysierten kathodisch abscheidbaren Elektrotauchlacke und deren anwendungstechnische Ausprüfung

Gemäß den in der Tabelle 2 zusammengefaßten Angaben werden pigmentierte Lacke in bekannter Weise hergestellt.

Tabelle 2

| Beispiel | Binde-[1] mittel (100 Tle Festharz) | mMol Ameisensäure | Tle Pigmentmischung [2] | Tle Zubereitung | Gew.-% Sn auf 100 Tle BM |
|---|---|---|---|---|---|
| 1 | BM 1 | 50 | 55 | 3,8 K1 | 0,7 |
| 2 | BM 1 | 50 | 50 | 4,2 K2 | 0,8 |
| 3 | BM 1 | 50 | 50 | 7,5 K3 | 1,0 |
| 4 | BM 2 | 60 | 35 | 6,7 K4 | 0,6 |
| 5 | BM 2 | 60 | 35 | 7,5 K3 | 1,0 |
| 6 | BM 3 | 50 | 40 | 5,2 K2 | 1,0 |

[1] Die Herstellung der Bindemittel wird später beschrieben

[2] Pigmentmischung:

2 Tle Farbruß 94 Tle Titandioxid (Rutil) 4 Tle basisches Bleisilikat (ca. 75 Gew.-% Pb)

Die mit deionisiertem Wasser auf einen Feststoffgehalt von 20 Gew.-% verdünnten Lacke sind bei Raumtemperatur über einen Zeitraum von 3 Wochen sedimentationsstabil. Die Rührstabilität (Rühren des Lackes im offenen Gefäß bei Raumtemperatur) ist bei allen Lacken nach 8 Wochen in Ordnung, d. h. es sind bei den eingebrannten Lackfilmen keine Veränderungen feststellbar.

Die Lacke werden auf entfettetes Stahlblech elektrisch abgeschieden, wobei die Bedingungen so gewählt werden, daß die Schichtstärke der eingebrannten Filme bei 20 ± 2 µm liegt. Die Vernetzung der Filme erfolgt bei 180° C/20 min. Bei der "Horizontalbeschichtung" werden in keinem Fall Oberflächenstörungen, wie Nadelstiche oder Krater beobachtet.

"Horizontalbeschichtung": Ein Stahlblech (ca. 10 x 20 cm) wird in der Mitte rechtwinkelig gebogen. Das Blech wird in das Beschichtungsbad so eingehängt, daß sich der waagrechte Schenkel des L-förmigen Stahlblechs etwa 15 cm unter der Oberfläche des Lackbades befindet und der senkrechte Schenkel nach oben gerichtet ist. Die Beschichtung erfolgt bei abgestellter Rührung mit einer Beschichtungsdauer von ca. 4 Minuten. Nach Ende der Beschichtung verbleibt das Blech noch 2 Minuten im Bad. Anschließend wird das Blech aus dem Bad genommen, nach weiteren 2 Minuten mit Wasser gespült und eingebrannt. Die Lackoberfläche wird in bezug auf Oberflächenstörungen beurteilt.

Vergleichsbeispiele

Zum Vergleich wurde ein Lack entsprechend Beispiel 1 durch Zugabe von 0,7 Gew.-% in Form des Dibutylzinndilaurats anstelle der erfindungsgemäß verwendeten Organozinn-Zubereitung katalysiert. Der Vergleichslack zeigt bereits nach 3 Tagen deutliche Sedimentation.

In einem weiteren Vergleich wurde ein katalysatorfreier Lack der obigen Zusammensetzung mit einem Kondensationsprodukt aus 1 Mol 2-Ethylhexanol und 0,5 Mol DBTO katalysiert. Der Lack erwies sich als sedimentationsstabil, zeigte jedoch bei der "Horizontalbeschichtung" Filmstörungen durch Nadelstiche.

Herstellung der in den Lacken eingesetzten Bindemittel

BM 1: In einem geeigneten Reaktionsgefäß werden 220 Tle Nonylphenol (1 Mol) mit 130 Tlen Diethylaminopropylamin (1 Mol) und 100 Tlen Toluol auf 75° C erwärmt und dem Ansatz anschließend unter leichtem Kühlen 33 Tle Paraformaldehyd, 91 % (1 Mol) zugefügt. Die Temperatur wird langsam gesteigert, bis sich eine zügige azeotrope Destillation einstellt. Nach Abtrennen von 21 Tlen Reaktionswasser wird das Toluol im Vakuum abdestilliert und das Produkt in 167 Tlen Diethylenglykoldimethylether gelöst.

Die so erhaltene Lösung wird bei 30 bis 40° C unter Kühlung mit 304 Tlen (1,0 Mol) eines mit 2-Ethylhexanol halbblockierten Toluylendiisocyanates versetzt und die Temperatur von 40° C 1,5 Stunden bis zu einem NCO-Wert von praktisch Null gehalten.

Anschließend werden 475 Tle eines Epoxidharzes auf Basis von Bisphenol A (Epoxidäquivalentgewicht 475) in 200 Tlen Propylenglykolmonomethylether gelöst und nach Zusatz von 835 Tlen des oben hergestellten Vorproduktes bei 95 bis 100° C bis zu einem Epoxidwert von praktisch Null reagiert. Der Feststoffgehalt beträgt ca. 75 %.

BM 2: In einem mit Rührer, Thermometer und Rückflußkühler ausgestatteten Reaktionsgefäß werden 1000 Tle eines Epoxidharzes auf Bisphenol A-Basis (Epoxidäquivalentgewicht ca. 500) in 492 Tlen Ethylglykolacetat bei 60 bis 70°C gelöst, 0,2 Tle Hydrochinon und 144 Tle (2 Mol) Acrylsäure zugegeben und die Temperatur auf 100 bis 110°C gesteigert. Die Reaktion wird bei dieser Temperatur bis zu einer Säurezahl von unter 5 mg KOH/g geführt. Anschließend wird das Reaktionsprodukt bei 60 bis 70°C mit 652 Tlen (2 Mol) eines Monoisocyanates aus 1 Mol Toluylendiisocyanat und 1 Mol Diethylethanolamin (70 %ig in Methylisobutylketon) versetzt und bis zu einem NCO-Wert von praktisch Null reagiert. Der Feststoffgehalt beträgt ca. 75 %.

BM 3: 500 Tle eines Epoxidharzes auf Basis von Bisphenol A (Epoxyäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 Tlen Triethylamin als Katalysator bis zu einer Säurezahl von weniger als 3 mg KOH/g reagiert. Dann werden 120 Tle eines NH-funktionellen Oxazolidins aus Aminoethanolamin, 2-Ethylhexylacrylat und Formaldehyd, sowie 26 Tle Diethylaminopropylamin zugefügt und der Ansatz bei 80°C bis zu einem Epoxidwert von praktisch Null reagiert. Der Ansatz wird mit 200 Tlen Propylenglykolmonomethylether verdünnt und mit 97 Tlen 3-n Ameisensäure partiell neutralisiert. Der Feststoffgehalt des Produkts beträgt 58.8 %.

Das Harz wird in einem Feststoffverhältnis von 80:20 mit einem Umesterungshärter, welcher in der nachstehenden Weise hergestellt wurde. gemischt. Das so hergestellte BM 3 weist einen Feststoffgehalt von 64 % auf.

Herstellung des Umesterungshärters: Zu einer Mischung aus 160 Tlen Malonsäurediethylester, 0,85 Tlen Piperidin und 0,54 Tlen Ameisensäure (85 %) werden bei 70°C 33 Tle Paraformaldehyd (91 %) portionsweise in der Weise zugegeben, daß durch die einsetzende exotherme Reaktion die Temperatur nicht über 90°C ansteigt. Das Reaktionsgemisch wird bei 90°C weitergerührt, bis der Paraformaldehyd vollständig gelöst ist. Die Temperatur wird unter einsetzender Wasserabspaltung innerhalb von 2 Stunden auf 140°C erhöht. Nach Erreichen von 140°C werden mit Spezialbenzin (Siedebereich 80 bis 120°C) als Schleppmittel insgesamt 24 Tle Wasser abdestilliert. Unter Anlegen von Vakuum wird anschließend das eingesetzte Schleppmittel abdestilliert und der Ansatz solange bei 120°C gehalten, bis die angegebene Viskosität bzw. der Brechungsindex erreicht sind.

Das erhaltene Produkt weist einen Feststoffgehalt (120°C, 30 Minuten) von 97 ± 1 % auf. Die Viskosität nach GARDNER-HOLDT einer Probe aus 9 g Harzlösung und 1 g Ethylglykol beträgt M. Der Gehalt an freiem Formaldehyd liegt unter 1,5 % und die Bestimmung des Brechungsindex ergibt einen Wert von n20/D = 1,4560. Die Verbindung hat ein mittleres Molekulargewicht von ca. 500. Die Esterfunktionalität beträgt 6 Esteräquivalente pro Mol bzw. 1,17 Esteräquivalente pro 100 g des Produkts.

## Patentansprüche

1. Organozinn-Zubereitungen, dadurch gekennzeichnet, daß sie Dibutylzinnoxid, welches nach mechanischer Dispergierung in einer Teilchengröße von 0,1 bis max. 5 $\mu$m vorliegt, und ein Dispergiermedium enthalten, welches aus

   (a) 60 bis 100 Gew.-% mindestens einer, gegebenenfalls teilweise oder vollständig protonisierten, substituierten Oxazolidinverbindung, welche durch Umsetzung einer Hydroxyalkylaminoverbindung mit Formaldehyd erhalten wurde, und mindestens ein Oxazolidin-Strukturelement und eine, auf die primären Hydroxylgruppen bezogene Hydroxylzahl von max. 50 mg KOH/g sowie ein Molekulargewicht (berechnet) von 500 bis 4000 aufweist,

   (b) 0 bis 40 Gew.-% mindestens eines, mit der Komponente (a) verträglichen, gegenüber Dibutylzinnoxid reaktionsinerten, wassertoleranten Lösemittels mit einem Siedepunkt zwischen 150 und 250°C, gegebenenfalls in Kombination mit bis zu 20 Gew.-% (bezogen auf die Menge der Komponente (b)) eines oberflächenaktiven Mittels, und

   (c) 0 bis 40 Gew.-% mindestens eines wassertoleranten Lösemittels mit einem Siedepunkt zwischen 100 und 150°C

   besteht, wobei die Prozentzahlen für die Komponenten (a), (b) und (c) die Summe 100 ergeben und die Organozinn-Zubereitungen einen Gehalt an Dibutylzinnoxid (bezogen auf den Gehalt an Zinn) von 5 bis 30 Gew.-%, vorzugsweise von 12 bis 25 Gew.-%, aufweisen.

2. Verfahren zur Herstellung von Organozinn-Zubereitungen nach Anspruch 1, dadurch gekennzeichnet, daß man zur mechanischen Dispergierung von Dibutylzinnoxid auf eine Teilchengröße von 0,1 bis max. 5 $\mu$m ein Dispergiermedium verwendet, welches aus

(a) 60 bis 100 Gew.-% mindestens einer, gegebenenfalls teilweise oder vollständig protonisierten, substituierten Oxazolidinverbindung, welche durch Umsetzung einer Hydroxyalkylaminoverbindung mit Formaldehyd erhalten wurde, und mindestens ein Oxazolidin-Strukturelement und eine, auf die primären Hydroxylgruppen bezogene Hydroxylzahl von max. 50 mg KOH/g sowie ein Molekulargewicht (berechnet) von 500 bis 4000 aufweist,

(b) 0 bis 40 Gew.-% mindestens eines, mit der Komponente (a) verträglichen, gegenüber Dibutylzinnoxid reaktionsinerten, wassertoleranten Lösemittels mit einem Siedepunkt zwischen 150 und 250°C, gegebenenfalls in Kombination mit bis zu 20 Gew.-% (bezogen auf die Menge der Komponente (b)) eines oberflächenaktiven Mittels, und

(c) 0 bis 40 Gew.-% mindestens eines wassertoleranten Lösemittels mit einem Siedepunkt zwischen 100 und 150°C

besteht, wobei die Mengenverhältnisse so gewählt werden, daß die Prozentzahlen für die Komponenten (a), (b) und (c) die Summe 100 ergeben und die Organozinn-Zubereitungen einen Gehalt an Dibutylzinnoxid (bezogen auf den Gehalt an Zinn) von 5 bis 30 Gew.-%, vorzugsweise von 12 bis 25 Gew.-%, aufweisen.

3. Verwendung der Organozinn-Zubereitungen nach Anspruch 1 zur Katalysierung der Vernetzungsreaktionen von durch Umesterung und/oder Umurethanisierung und/oder Reaktion endständiger Doppelbindungen vernetzbaren kationischen Lackbindemitteln.

4. Katalysierte kationische Lacke, insbesonders kathodisch abscheidbare Elektrotauchlacke, dadurch gekennzeichnet, daß sie 0,1 bis 3,0 Gew.-%, vorzugsweise 1,0 bis 2,0 Gew.-%, Zinn, berechnet auf den Feststoff des Bindemittels, in Form der OrganozinnZubereitungen nach Anspruch 1 enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, Bnd. 112, Nr. 2, 1990, Columbus, Ohio, US; Zusammenfassung 8798T, TOBINAGA, K. ET AL: 'ELECTROPHORETIC AQUEOUS COATINGS CONTAINING AMINE-MODIFIED EPOXIDIZED POLYBUTADIENE' Seite 68; * Zusammenfassung * & JP-A-01 174 568 (NIPPON PAINT CO., LTD) --- | 1-4 | C 07 F 7/22<br>C 09 D 5/44<br>C 08 G 18/24 |
| D,A | EP-A-0 261 486 (VIANOVA KUNSTHARZ A.-G.) * Das ganze Dokument * --- | 1-4 | |
| A | EP-A-0 060 974 (AIR PRODUCTS AND CHEMICALS, INC. ) * Das ganze Dokument * ----- | 1-3 | |

RECHERCHIERTE SACHGEBIETE (Int. Cl.5)

C 07 F
C 09 D
C 08 G

Der vorliegende Recherchenbericht wurde für alle Patentansprüche erstellt

| Recherchenort | Abschlußdatum der Recherche | Prüfer |
|---|---|---|
| DEN HAAG | 14-05-1992 | RINKEL L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

    & : Mitglied der gleichen Patentfamilie, übereinstimmendes Dokument